Europäisches Patentamt

European Patent Office

Office européen des brevets

(11) Publication number: **0 005 029**
A1

# (12) EUROPEAN PATENT APPLICATION

(21) Application number: 79300597.6

(22) Date of filing: 11.04.79

(51) Int. Cl.²: **G 02 B 5/16**
**H 01 B 11/00**

(30) Priority: 20.04.78 GB 1569478

(43) Date of publication of application:
31.10.79 Bulletin 79/22

(84) Designated Contracting States:
CH DE FR IT NL SE

(71) Applicant: Telephone Cables Limited
Chequers Lane
Dagenham Essex RM9 6QA(GB)

(72) Inventor: Ashpole, Raymond Sidney
4 The Martins Drive Linslade
Leighton Buzzard Bedfordshire(GB)

(72) Inventor: Lewis, Dennis Laurence
5 Blenheim Close Oxhey
Watford(GB)

(72) Inventor: Peachey, Colin Joseph
18 Cornfield Road
Bushey Hertfordshire(GB)

(74) Representative: Pope, Michael Bertram Wingate
Central Patent Department The General Electric
Company Limited Hirst Research Centre
Wembley Middlesex HA9 7PP(GB)

(54) Optical fibre cables.

(57) In an optical fibre cable comprising an assembly of transmission units, either all optical fibre waveguide units or including electrical conductor modules, at least three transmission units of circular cross-section and of equal external diameter, at least one of which is an optical fibre waveguide unit (15), are helically laid around a central reinforcing member (17), with or without intervening units, preferably conductor modules (16), which may be of smaller diameter, and possibly with one or more outer helically laid layers of conductor modules, the whole assembly being contained in a closely fitting tubular jacket (18), which may have reinforcing members embedded therein. Each optical fibre unit consists of a plastic sheath having a circular cylindrical external surface, with one or more bores containing loose optical fibres, and compression resistant reinforcing members embedded in the sheath. Each electrical conductor module may consist of any desired number of wires, with or without a containing sheath.

Fig.5.

EP 0 005 029 A1

This invention relates to optical fibre cables of the type incorporating a plurality of longitudinal transmission units, which may all be optical fibre waveguide units or may include electrical conductors in addition to one or more optical fibre waveguide units.

It has been proposed to employ, in the construction of an optical fibre cable, one or more optical fibre units consisting of a tubular sheath of plastics material with one or more optical fibre waveguides disposed in the tube bore, the units or a unit, with or without one or more electrical conductors, being assembled together in either a straight or an intertwisted arrangement within an outer jacket. However, optical fibre cables of this construction are subject to the disadvantage that the sheaths of the individual fibre units have a tendency to shrink longitudinally due to relaxation, this shrinkage resulting in the formation of undulations, kinks or bends in the optical fibres, which cause undesirably high optical losses to occur in the fibres in operation of the cable.

It is an object of the present invention to provide an optical fibre cable incorporating one or more optical fibre units, which units are of an improved form whereby the tendency for shrinkage of the sheaths to occur can be eliminated.

According to the invention, in an optical fibre cable consisting of an assembly of longitudinal transmission units, including one or more optical fibre waveguide units of circular cross-section, helically twisted in one or more layers around a central elongate reinforcing member disposed along the axis of the cable, and a cylindrical tubular jacket closely fitting around said assembly, the said assembly includes or consists of at least three said transmission units which are of circular cross-section with equal

0005029

external diameter and are helically laid directly upon said central reinforcing member, and at least one of which is an optical fibre waveguide unit, and each optical fibre waveguide unit in said assembly consists of a sheath of synthetic plastic material having one or more tubular bores therethrough and having a circular cylindrical external surface, one or more optical fibre waveguides disposed loosely in at least one of said bores and lying generally parallel to the unit axis, and, embedded in the sheath wall surrounding said one or more bores, one or more continuous elongate compression resistant reinforcing members disposed substantially parallel to the optical fibre waveguide or waveguides.

The term "loosely", as used herein with reference to the disposition of the optical fibre or fibres in the bore or bores of the unit sheath, is to be understood to mean that the bore, or each bore, is of sufficiently large cross-section to permit freedom of movement of the fibre, or of each individual fibre, within it in both radial and axial directions. Such freedom of movement of optical fibre waveguides within a containing sheath is advantageous in that it reduces optical losses in the waveguides in operation.

The reinforcing members embedded in the optical fibre unit sheath may be composed of any material which is resistant to compression, so as to prevent shrinkage of the sheath, suitable materials being, for example, fine wires of metals such as steel or copper, glass or silica filaments, and resin-impregnated aromatic polyamide yarns. Glass or silica filaments may, if desired, be coated with a synthetic resin, for example polyurethane resin, to protect them from breakage while being embedded in the sheath. The continuous reinforcing members impart tensile strength as well as compression resistance to the sheath, thus preventing the sheath from stretching, and hence preventing the application of tension to the optical fibre or fibres, in use of the cable.

In one form of optical fibre unit suitable for use in a cable in accordance with the invention, the sheath consists of a relatively thin-walled tube, with a central bore in which the optical fibre or fibres is or are disposed, and with two or more reinforcing members embedded in the wall of the tube. Alternatively, the sheath may be formed with two or more bores, each containing one or more optical fibres, and in this case the reinforcement may consist of a single member embedded along the axis of the sheath, the bores being situated on either side of or around the reinforcing member, or two or more reinforcing members may be disposed either in the outer part of the sheath surrounding the bores, or between the bores so that the reinforcing members and the optical fibres within the bores are substantially equidistant from the axis of the sheath.

An optical fibre unit of any of the forms described above may be manufactured by a single extrusion process, the sheath being extruded around the optical fibre or fibres and the reinforcing member or members from a suitably designed extruder head provided with means for feeding the reinforcing member or members into the extrudate so as to be embedded therein, and with means for feeding the optical fibre or fibres into the bore or bores formed in the extrudate. The fibre feeding arrangement preferably includes a tube or tubes extending into the bore, or into each bore, of the extruded sheath, for ensuring that the fibres do not adhere to the extrudate and that the bore or bores formed are of sufficiently large diameter to accommodate the fibre or fibres with the desired freedom of movement.

The optical fibre or fibres employed in the
cable of the invention may be of any desired type;
a preferred type of fibre consists of a silica waveguide, suitably doped so as to have a desired refractive index profile, in known manner, and provided
with a protective coating of synthetic plastic material,
for example polyurethane resin.

The cable jacket is preferably of circular
cross-section. During manufacture of the optical
fibre units, and of other parts of the cable construction, including the jacket, of circular cross-section,
by extrusion, slight distortion of the circularity of
the extruded parts may occur, and it is to be understood that the use of the word "circular" herein with
reference to such parts does not exclude such accidental distortion.

The assembly of transmission units in the cable
may consist wholly of optical fibre waveguide units,
of any of the above-described forms, or one or more of
the transmission units may be electrical conductor
modules: each such module may consist of a single conductor, or a pair, or quad, or any desired number of
conductors, and the conductor or conductors may be
unsheathed, or may be contained within a tubular
sheath, suitably formed of the same material as the
optical fibre sheath or sheaths. Thus the three or
more units of equal external diameter which are laid
directly upon the reinforcing member along the axis of
the cable may all be optical fibre units, or may consist
of one or more optical fibre units together with one
or more sheathed electrical conductor modules, to a
total of at least three units. One preferred arrangement consists of three or more optical fibre units of
equal diameter, spaced apart by an equal number of conductor modules, which are preferably of smaller external diameter than the optical fibre units, the said fibre units and conductor modules being helically intertwisted around the said axial reinforcement member. In such an arrangement the total number of electrical conductors is suitably equal to the total number of optical fibres.

The unit assembly of the cable may consist only of an arrangement of said equal diameter units laid immediately adjacent to the axial reinforcing member, with or without intervening units of smaller diameter. If desired, however, such an arrangement may constitute an inner layer of the assembly, and may be overlaid by one or more additional layers of electrical conductor modules, helically twisted around the said inner layer.

The helically twisted assembly of units is advantageous, as compared with the alternative prior arrangement of a straight parallel assembly, in that the helical disposition of the units allows stretching, bending, or longitudinal thermal expansion of the cable as a whole to take place without consequential stretching of the individual units, and hence without stretching or tensioning of the optical fibres within the units. The optimum pitch of the helix or helices of a unit assembly will depend upon various features of construction of the optical fibre units, including the diameter of these units, the diameter of the bore or bores in the units, and the degree of freedom of movement of the optical fibres in the bores, the pitch being so chosen that any distortion of the fibres which would cause increased optical losses is avoided. Usually a pitch of 40 to 60 times the external diameter of an optical fibre unit is preferred.

The central reinforcing member of the cable is suitably a steel wire, but other materials of high tensile strength may be used if desired. Additional reinforcement for the cable may be provided by tensile members, such as steel wires, embedded in the cable jacket.

Some specific forms of optical fibre unit suitable for incorporation in a cable in accordance with the invention, and some specific forms of optical fibre cable in accordance with the invention, will now be described in the following examples, with reference to the accompanying drawings, in which:-

Figures 1, 2, 3 and 4 are cross-sections of four different forms of optical fibre unit, Figures 2, 3 and 4 being drawn on a scale approximately twice that of Figure 1, and

Figures 5 and 6 are cross-sections of two forms of optical fibre cable incorporating a plurality of units of the form shown in Figure 1, together with electrical conductor modules.

Example 1.

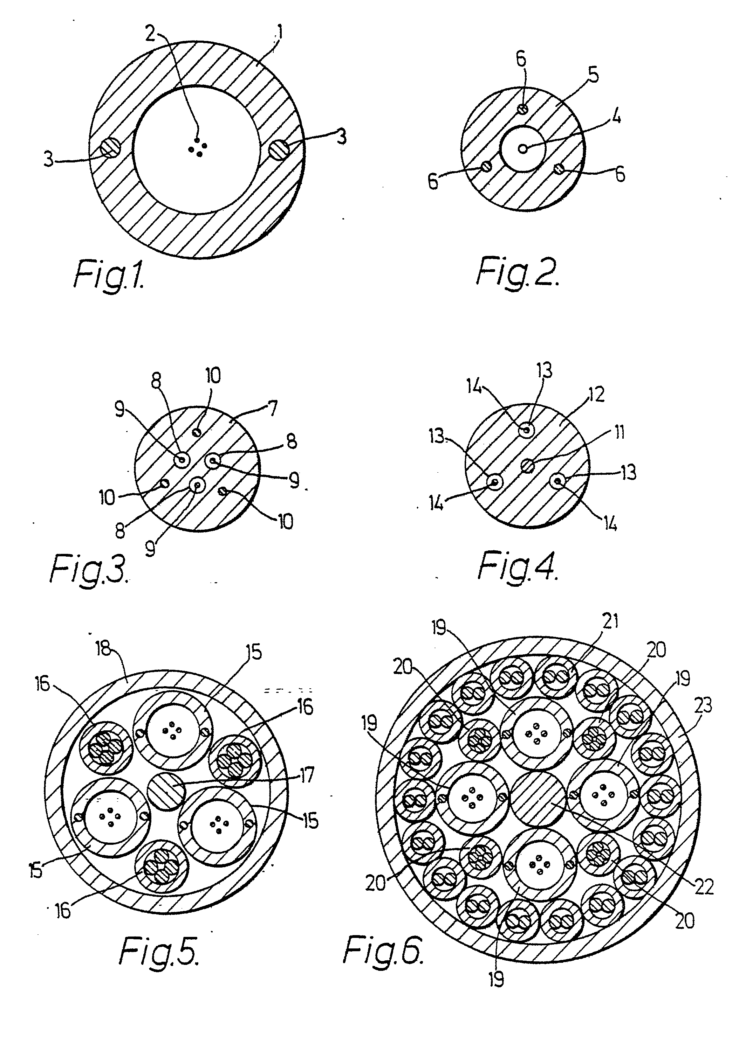

The unit shown in Figure 1 consists of a tubular sheath 1 loosely surrounding four optical fibres 2, the sheath being reinforced by two steel wires 3, which are embedded in the tube wall, diametrically opposite to one another, and which extend continuously along the whole length of the sheath. In a specific example of a unit of this form, the tube 1 is formed of carbon-loaded polyethylene and has an external diameter of 5 mm and internal diameter of 3 mm, the copper wires are 0.6 mm in diameter, and each of the optical fibres 2 consists of a 120 microns diameter fibre of vitreous silica doped with phosphorus pentoxide to give a graded index profile, with a protective coating consisting of several layers, each 3 to 5 microns thick, of polyurethane resin containing carbon powder in one or two inner layers and titania powder and colouring matter in the outer layers, the overall diameter of the coated fibre being approximately 150 microns.

Example 2.

The unit shown in Figure 2 comprises a single optical fibre 4 loosely contained in the bore of a tubular sheath 5, in the wall of which are embedded three continuous polyurethane-coated silica filaments 6, equally spaced apart around the bore. In a specific example, the sheath 5 is formed of nylon and has an external diameter of 1.5 mm and internal diameter of 0.5 mm, the diameter of the coated silica filaments 6 is 150 microns, and the optical fibre is of the same form as those described in Example 1.

Example 3.

The sheath 7 of the unit shown in Figure 3 is formed with three bores 8, equally spaced apart around the sheath axis, each containing a single optical fibre 9, and the sheath is reinforced with three polyurethane-coated silica filaments 10 embedded therein, the filaments being equally spaced apart and disposed on a circle surrounding the bores 8. In a specific example, the sheath 7 is of nylon and has an external diameter of 1.5 mm, the diameter of each bore 8 is approximately three times that of the optical fibre contained therein, the optical fibres are of the form described in Example 1, and the coated silica filaments are 150 microns in diameter.

Example 4.

The unit shown in Figure 4 comprises a sheath 12 formed with three bores 13, each containing an optical fibre 14, equally spaced apart around the sheath axis, in this case the sheath reinforcement consisting of a single steel wire 11 embedded along the axis of the sheath 12. In a specific example, the sheath is formed of nylon and has an external diameter of 1.5 mm, the diameter of each bore 13 is approximately three times that of the optical fibre 14 therein, the optical fibres being of the form described in Example 1, and the diameter of the wire 11 is 200 microns. In a modification, the wire 11 may be replaced by a polyurethane-coated silica filament.

All the units described in Examples 1 to 4 are produced by a single-step extrusion process, the sheath material being extruded from an extruder head suitably designed in each case to form the required bore or bores in the extrudate and to enable the reinforcing member or members to be fed into the extrudate so as to be embedded therein at the desired location or locations, and provided with one or more appropriately positioned steel tubes through which the optical fibre or fibres is or are fed into the bore or bores of the extruded sheath.

Example 5.

The cable shown in Figure 5 consists of three optical fibre units 15, each of the form shown in Figure 1, together with three intervening units 16 in the form of electrical conductor modules each consisting of a group of four helically intertwisted wires surrounded by a polyethylene sheath, all of which units are helically intertwisted around a straight steel wire 17 disposed along the axis of the cable, the whole assembly being surrounded by a closely fitting jacket 18. In a specific example of a cable of this form, the units 15 are as specifically described in Example 1 and the units 15 and 16 are helically twisted with a pitch of 20 cm, the central wire 17 is 1.5 to 2.0 mm in diameter, and the jacket 18 is a polyethylene tube 1 to 2 mm thick, with a bore fitting closely over the intertwisted units 15 and 16. If desired, the electrical conductor modules may be omitted, the cable then consisting only of optical fibre units intertwisted around a central reinforcing member and surrounded by a jacket.

-10-

Example 6

In the cable shown in Figure 6, the unit assembly consists of an inner layer composed of four optical fibre units 19 and four electrical conductor modules 20, respectively of the same form and materials as the optical fibre units 15 and conductor modules 16 shown in Figure 5, and an outer layer of conductor modules 21 each comprising a helically twisted pair of wires in a polyethylene sheath. The fibre units and conductor modules of the inner layer are helically intertwisted around a central steel wire 22, and the modules 21 are helically intertwisted around the said inner layer. The whole assembly is surrounded by a closely fitting polyethylene jacket 23.

It will be understood that cables of either of the forms shown in Figures 5 and 6 can also be made using optical fibre units of any of the forms shown in Figures 2, 3 and 4. Furthermore, cables of these forms are not limited to three or four optical fibre units as shown, but may incorporate any desired number of such units, with or without any desired number of electrical conductor modules, and the number of fibres and wires in each optical fibre unit and conductor module respectively may also be varied as required.

0005029

<u>Claims</u>

1.      An optical fibre cable consisting of an assembly of longitudinal transmission units, including one or more optical fibre waveguide units of circular cross-section, helically twisted in one or more layers around a central elongate reinforcing member disposed along the axis of the cable, and a cylindrical tubular jacket closely fitting around said assembly, characterised in that the said assembly includes or consists of at least three said transmission units which are of circular cross-section with equal external diameter and are helically laid directly upon said central reinforcing member, and at least one of which is an optical fibre waveguide unit, and in that each optical fibre waveguide unit in said assembly consists of a sheath of synthetic plastic material having one or more tubular bores therethrough and having a circular cylindrical external surface, one or more optical fibre waveguides disposed loosely, as hereinbefore defined, in at least one of said bores and lying generally parallel to the unit axis, and, embedded in the sheath wall surrounding said one or more bores, one or more continuous elongate compression resistant reinforcing members disposed substantially parallel to the optical fibre waveguide or waveguides.

2.      A cable according to Claim 1, characterised in that at least one optical fibre waveguide unit consists of a tubular sheath with a central bore containing one or more optical fibre waveguides, and with two or more said reinforcing members embedded in the wall thereof.

3.      A cable according to Claim 1 or 2, characterised in that the tubular jacket is of circular cross-section and in that the said assembly of transmission units consists wholly of optical fibre waveguide units.

4. A cable according to Claim 1 or 2, characterised in that the tubular jacket is of circular cross-section and in that the said assembly of transmission units includes one or more electrical conductor modules, as hereinbefore defined.

5. A cable according to Claim 4, characterised in that all of the said transmission units of equal external diameter which are helically laid directly upon the central reinforcing member of the cable are optical fibre waveguide units.

6. A cable according to Claim 4 characterised in that the said transmission units of equal external diameter which are helically laid directly upon the central reinforcing member of the cable include one or more electrical conductor modules.

7. A cable according to Claim 4, characterised in that the said assembly consists of or includes at least three optical fibre waveguide units of equal external diameter, helically laid directly upon the central reinforcing member of the cable, and spaced apart by an equal number of electrical conductor modules helically intertwisted therewith.

8. A cable according to Claim 7, characterised in that the said electrical conductor modules are of smaller external diameter than the said optical fibre waveguide units.

9. A cable according to Claim 7 or 8, characterised in that the total number of electrical conductors in the said modules is equal to the total number of optical fibre waveguides in the said optical fibre waveguide units.

10. A cable according to Claim 4, characterised in that the said assembly consists of an inner layer of transmission units of equal external diameter

helically laid directly upon the central reinforcing member of the cable, with or without electrical conductor modules of smaller external diameter laid between said units, and one or more additional layers of electrical conductor modules overlying and helically twisted around said inner layer.

Fig.1.

Fig.2.

Fig.3.

Fig.4.

Fig.5.

Fig.6.

## European Patent Office

## EUROPEAN SEARCH REPORT

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | FR - A - 2 300 348 (BICC)<br><br>* page 5, line 24 to page 6, line 32; figures 1 to 4 *<br><br>--- | 1-3,5 | G 02 B 5/16<br>H 01 B 11/00 |
| | DE - A - 2 635 917 (SIEMENS)<br><br>* page 4, lines 3-6; figure 1 *<br><br>--- | 1,2 | |
| | COMPUTER DESIGN, Vol. 17, No. 2, February 1978<br>CONCORD (US)<br>"System connection transmits phone calls by light impulses", pages 14 and 18<br><br>* page 18, only figure *<br><br>--------- | 1,4,6-8,10 | **TECHNICAL FIELDS SEARCHED (Int.Cl.²)**<br><br>G 02 B 5/16<br>H 01 B 11/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-07-1979 | DEMOLDER |

EPO Form 1503.1  06.78